(19)

Europäisches
Patentamt
European
Patent Office
Office européen
des brevets

(11) **EP 2 017 946 A1**

(12) **EUROPEAN PATENT APPLICATION**

(43) Date of publication:
**21.01.2009 Bulletin 2009/04**

(51) Int Cl.:
***H02M 3/07*** (2006.01)    ***H02J 7/35*** (2006.01)

(21) Application number: **08150448.2**

(22) Date of filing: **21.01.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **20.07.2007 US 961433 P**

(71) Applicant: **Stichting IMEC Nederland
5656 AE Eindhoven (NL)**

(72) Inventor: **Meynants, Guy
B-2470, Retie (BE)**

(74) Representative: **Sarlet, Steven Renaat Irène et al
Gevers & Vander Haeghen
Holidaystraat, 5
1831 Diegem (BE)**

(54) **Electronic power conversion circuit**

(57)     An electronic power conversion circuit (103) is presented for converting an input power (101) to an output power (102). The circuit (103) comprises at least one conversion block (104) and a clock generator (109). Each conversion block comprises an input, an output and a plurality of charge storage elements (108) and switches (105) between the input and output. Each block (104) is alternately switchable between a first state (106) in which electric charge is loaded from the input and a second state (107) in which electric charge is supplied as converted power to the output. The clock generator (109) generates clock signals for controlling the switches (105) and thereby switches between the first and second states. The circuit (103) is characterized in that the clock generator (109) comprises at least one input node (110) for receiving at least one input parameter and in that the clock generator is provided for varying the frequency of the clock signals in relation to the at least one input parameter.

**Fig. 1**

EP 2 017 946 A1

**Description**

**Technical Field**

The invention relates to an electronic power conversion circuit for converting an input power to an output power. In particular, the invention can be used efficiently in a solar cell circuit.

**Background art**

An integrated circuit with a solar cell is attractive for an autonomous sensor. The sensor measures data and is completely maintenance free. When coupled to a radio transmitter, no wiring is required, no battery replacements are needed.

In a standard photovoltaic cell, several diodes are put in series to create a higher output voltage. Usually this is obtained by putting the diodes on separate substrates. Such solution is difficult for compact and small autonomous systems. A solution within a single substrate is preferred. An example of an implementation on a single substrate can be found in US patent 7,098,394. In this patent a method and a device are presented for powering circuitry with on-chip solar cells within a common substrate. They use two photodiodes in series, without performing a voltage conversion. One of them has to be a bipolar transistor with the collector shorted to base. This solution can not be combined with logic on the same substrate since the substrate is not at ground potential - just use two diodes are used in series to generate two times the forward voltage and is therefore not a compact solution.

Photodiodes can also be put in series on chip in technologies that allow isolation, e.g. triple well or SOI technologies. In "Colby et al., 'A SOI process for fabrication of solar cells, transistors and electrostatic actuators', Transducers '03, The 12th International Conference on Solid State Sensors, Actuators and Microsystems, Boston, June 8-12, 2003", a SOI technology is used on which isolated diodes are available. The on-chip solar cell powers an inverter circuit. Unfortunately, in such technologies the thickness of the active layer is quite thin, which reduces the quantum efficiency considerably. Additionally, SOI technology is not a standard CMOS technology.

The use of a solar cell as an auxiliary power source in an electronic circuit has been described in "A. Fish et al, 'CMOS Image Sensor with Self-Powered Generation Capability', IEEE Transactions on Circuits and Systems - II: Express Briefs, Vol. 53, No. 11, November 2006, pp. 1210-1214". The authors describe a chip that generates a voltage higher than the supply voltage by one forward diode voltage. This is obtained by placing a photodiode between the supply voltage and the generated voltage. However, no voltage conversion is described and the circuit relies on the availability of a main VDD line.

In US patent application 2005/0061361, a charge pump circuit is described that is combined with a photovoltaic cell on a single semiconductor substrate. The solar cell device using this pump, comprises two charge pumps which sequentially increase the voltages. The application further describes the use of a second (auxiliary) charge pump to drive the main charge pump circuit.

**Disclosure of the invention**

The present invention relates to an electronic power conversion circuit for converting an input power to an output power. The circuit comprises at least one conversion block and a clock generator for generating clock signals. Each of the at least one conversion blocks comprises an input, an output and a plurality of charge storage elements and switches between input and output. Each block is configured such that the block is alternately switchable between a first state in which electric charge is loaded from its input and a second state in which electric charge is supplied as converted power to its output. The clock generator is provided for generating clock signals for controlling the switches of the at least one conversion block and thereby switching the at least one conversion block between the first and second states. The circuit is characterized in that the clock generator comprises at least one input node for receiving at least one input parameter and in that the clock generator is provided for varying the frequency of said clock signals in relation to the at least one input parameter it receives.

In the circuit of the invention, the output power becomes virtually independent from the input power. As a result, a variable input power source can be converted into a substantially fixed output power, or a substantially fixed input power can be converted into a variable output power, etc., simply by setting the appropriate frequency of the clock signals by means of the input parameters on the input nodes of the clock generator. As a result, the circuit design of the invention can be used in a wider range of applications with respect to any of the prior art designs.

In an embodiment, the circuit is provided for converting a variable input power supplied from an energy scavenging means to a substantially fixed output power e.g. supplied to a load. In this embodiment, one of the at least one input parameters is formed by the variable input power of the energy scavenging means. In this way, the frequency of the clock signals is controlled in relation to the variable input power, which can make it possible to maintain the output power at a substantially fixed level. So the present invention enables a system in which the power transmitted through the power converter is adjusted based upon the incoming power, e.g. proportional to the incoming power. This is for example useful in a system in which the load is a rechargeable battery, which can now be recharged even when the incoming power is low.

In an embodiment, the energy scavenging means is a photovoltaic cell, wherein light energy is converted into a photovoltaic current. The conversion block(s) is/are clocked with a clock generator that clocks with a speed related to the light intensity; the circuit clocks fast at high light intensity, and clocks slow at low light intensity.

In an embodiment, the energy scavenging means is a thermal energy scavenging device wherein thermal energy is converted into a current. This current is related to the thermal gradient across the thermal energy scavenging device. The conversion block is clocked with a clock generator that clocks with a speed proportional to the thermal energy; the circuit clocks fast at high temperatures, and clocks slow at low temperatures. Other scavenging techniques known to the person skilled in the art e.g. mechanical power, can also be used in the present invention.

In an embodiment, the circuit and the energy scavenging means are implemented on a single substrate. In other words, the conversion block is clocked with a clock generator that can be made on the same chip and that clocks with a speed proportional to the input power generated in the energy scavenger (clocks fast when input power is high, clocks slow when input power is low). In this way, the optimal operating point for the conversion blocks can be maintained. Compared to the prior art, this solution is cheaper, more compact and more efficient than other single-substrate solutions. It can work autonomous; no battery replacements or rechargements are required.

In an embodiment, the at least one conversion block is a charge pump. The charge pump comprises a plurality of capacitors as charge storage elements with the switches in between. The clock generator circuit generates clock signals controlling the switches.

In another embodiment, the at least one conversion block is an inductive power converter comprising at least one inductor and at least one switch. Inductive converters also have a relation between the clock frequency and the transmitted power through the converter, which means that the same principles as described in the detailed section of this patent application can be utilized together with inductive converters.

In an embodiment, the clock generator is provided for taking the output power into account upon generating the clock signals. The output power can be determined by what is required for a load circuit or the load device connected to this output. In an embodiment, the load circuit is at least partially located on the same substrate. This allows to generate a small fully autonomous sensor.

Furthermore, when the load is an energy storage device like a battery or capacitor, this solution allows to operate the conversion block at a high efficiency under all input power conditions. The maximal available power can be transmitted to the energy storage device under all conditions. When the conversion block(s) is/are clocked slow because of a low available input power, the energy storage device will be charged at a lower rate, but the power consumption of the power converter itself will also be low. This allows obtaining a high efficiency under a wide range of input power conditions. Therefore, the frequency of the clock signals is preferably at least partly determined on the basis of the output power. This may be required to adjust the voltage or current at the output to the desired values. It is especially important when the output is a load circuit, and no energy storage device is present in the system. When the output load contains an energy storage device like a battery or supercapacitor, this may be required to prevent overcharging.

The circuit of the present invention can be used with a load which stores energy (like a battery or capacitor). When plenty of power is available at the energy source, the power converted through the power converter is set to be large, and the system can effectively charge the load element. When the input power drops, the energy transfer through the power converter is reduced by adjusting its control signals. The load will be charged at a slower rate, but the power consumed in the power converter will also drop. The adjustment of power transfer through the power converter is typically done by changing its clock frequency. In standard systems, an adjustment is done to control the output voltage, and it then depends on output characteristics. In such systems, the input power source is assumed to be large, with plenty of power available. When the energy source is an on-chip photovoltaic cell, this is not the case. When the output is an energy storage reservoir like a battery or capacitor, the output characteristics (voltage or current) can be adjusted. The power transmitted through the power converter can be adjusted according to the available incoming power (rather than to the desired output voltage or current).

In an embodiment the clock generator comprises a separate power source provided for supplying power in relation to the input power. The power source can be related to the energy scavenging means generating a related current from the input power. The clock generator circuit can start autonomous. Compared to the prior art, the present circuit can work autonomous; no battery replacements or rechargements are required. Alternatively, the source can also be an auxiliary source arranged for generating the clock signals.

In an embodiment, the clock generator comprises a ring oscillator connected to the power source and provided for generating a control frequency in relation to the input power, whereby the clock signals are being generated from the control frequency. The ring oscillator comprises different stages which are being turned on or off according to the input current. In other words, the speed (or frequency) of the inverters is controlled by the input power.

In another embodiment, a single chip is presented comprising the circuit of the present invention as energy provider, a sensor, a readout circuit for the sensor and radio transmitter. This single chip contains no pins (except perhaps the interface to the sensor or an antenna). Such chip can be used to measure environmental parameters and transmit this data to a base receiver. The energy supply to this chip is wireless and pin-less. The use of monocrystaline silicon provides a very efficient and compact solution.

This patent application demonstrates the feasibility of an on-chip solar cell, or other scavenging systems to generate a small amount of power for on-chip sensors and circuitry on a common substrate.

## Brief description of the drawings

Presently preferred embodiments are described below in conjunction with the appended drawing figures, wherein like reference numerals refer to like elements in the various figures, and wherein:

Fig.1 shows a block diagram of the present invention.

Fig.2 shows an electrical equivalent model of a photodiode.

Fig.3 shows the system concept: a photodiode, voltage converter and possibly a load are on the same chip.

Fig.4 shows a conceptual charge pump scheme.

Fig.5 shows a unit cell of the charge pump.

Fig.6 shows a photodiode and first cell of the charge pump

Fig.7 shows the last cell of the charge pump and a capacitive load.

Fig.8 shows the simulation result of the charge pump with a 5 pF capacitor.

Fig.9 shows the output stage with an autonomous PMOS switch.

Fig.10 plots a simulation result with the modified output stage of figure 8.

Fig.11 shows the generation of $\phi1$ and $\phi2$ clocks.

Fig.12 shows a clock generation circuit.

Fig.13 shows ring oscillator outputs (3 phases) for the circuit of figure 12.

Fig. 14 shows a Dickson charge pump configuration with active NMOS switches

Fig. 15 shows a bootstrap circuit to drive the clock signals of the Dickson charge pump.

Fig. 16 shows another clock generator circuit that generates a clock proportional to the input light power.

Fig. 17 plots the output of a simulation of the circuit of fig. 16.

Fig. 18 shows a voltage converter to convert the output signals of figure 16 into logic levels between Vdd and gnd.

Fig. 19 plots a simulation result of the output voltage of a Dickson charge pump controlled by the oscillator as shown in figure 16.

## Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

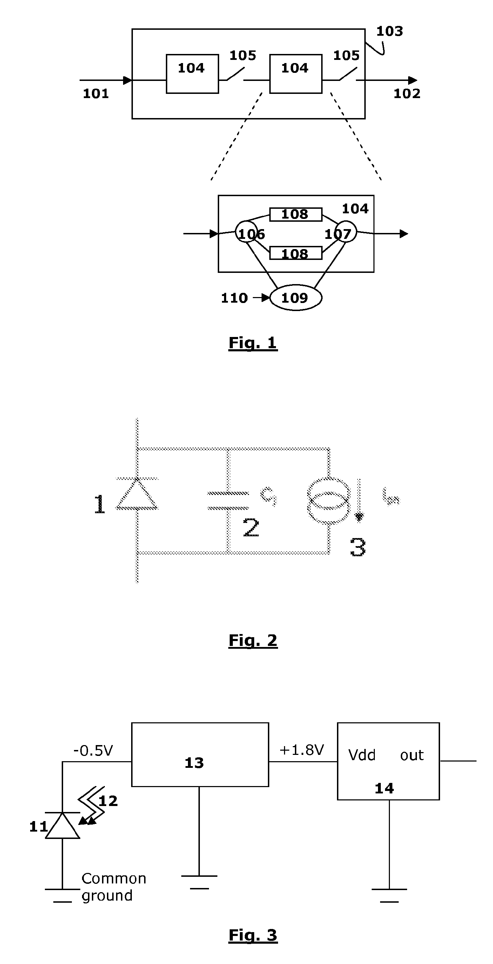

The present invention relates to a circuit (**103**) for converting an input power (**101**) into an output power (**102**), see fig.1. This output power can for example be a predetermined voltage supplying a battery. The circuit comprises at least one conversion block (**104**) and a clock generator (**109**) for generating clock signals. Each block comprising an input, an output and a plurality of charge storage elements (**108**) and switches between said input and output (**105**). Each block is (**104**) configured such that the block is alternately switched between a first state (**106**) in which electric charge is loaded and a second state (**107**) in which electric charge is supplied as converted power. The clock generator generates clock signals for controlling the switches (**105**) of the conversion blocks and thereby switching between the first and second states. The clock generator can vary the frequency of the clock signals in relation to an input parameter it receives via an input node (**110**). This input parameter can be related to the input and/or output power.

The present invention is exemplified by solar cell system. Note that the proposed invention is not limited to solar cell systems but can also be used in other scavenger systems known to the person skilled in the art; e.g. using thermal, mechanical power, or other.

The power converter circuit that is used in this system is exemplified with a charge pump. Note that the proposed invention is not limited to charge pumps, but also other power converting systems can be utilized; e.g. inductive power converters, or other.

The circuit of the present invention provides a solar cell circuit wherein a photocurrent of an on-chip photodiode is used as an energy source. To generate a predetermined voltage, the solar cell circuit of the present invention comprises a charge pump converting the photovoltaic current into a higher voltage. The charge pump used in the present invention is clocked with a generator made on the same chip and which clocks with a frequency proportional to the photovoltaic current.

The photocurrent is proportional to the photodiode area and the available light power. The photodiode is a diode (**1**) with a junction capacitance $C_j$ (**2**) and a current source $I_{ph}$ (**3**) generating the (reverse bias) photocurrent, see Fig.2. In this patent application, the dimensions mentioned in table 1 will be used. A spectral response of 0.2 A/W and a light intensity of 10 mW/cm$^2$ (outside clouded, or inside under bright light) are assumed.

Table 1: Calculation of photodiode output power

| Spectral response | 0.2 | A/W |
|---|---|---|
| Light intensity | 10 | mW/cm$^2$ |
| Diode area W | 250 | Micron |
| Diode area L | 250 | Micron |
| Diode area (total) | 6.25e-4 | cm$^2$ |
| Diode perimeter (total) | 1000 | Micron |
| Photocurrent | 1.25 | $\mu$A |
| Voltage | 0.5 | V |
| Output power | 0.625 | $\mu$W |

The output voltage is low under these conditions (0.625 $\mu$W). The output power of a 1 mm$^2$ cell is 10 $\mu$W which is already workable for a small simple low-data-rate sensor. Light collimators (lenses) could be used to concentrate the light and further increase the output power (or reduce the required diode area).

On a standard CMOS chip, the only available junction with good quantum efficiency is the n-well to substrate junction. Charges are either generated in the depletion region of the diode, or underneath. In the latter case, these charges need to diffuse to the photodiode. The other available junctions (n+/p-well or p+/n-well) have a collection volume that is too small to obtain a good quantum efficiency.

Because the substrate is a common (ground) contact for the entire chip, these photodiodes can not be put in series. Under equilibrium conditions, the voltage at the photodiode will become negative, at around -0.6V. The generated voltage has to be converted to a positive voltage >1V by an on-chip self-starting DC/DC converter (**13**).

Fig.3 shows a single-chip integrated circuit. The voltage (typical -0.5V) generated by incoming light (**12**) on a photodiode (**11**) is converted by a self-starting autonomous voltage converter (**13**) on the same chip to a useable voltage (i.e. +1.8V) for a load (**14**) (sensor or battery). This load can be an on-chip sensor. The integrated circuit can also be used to power an off-chip battery load.

*Charge pump concept with simulation results*

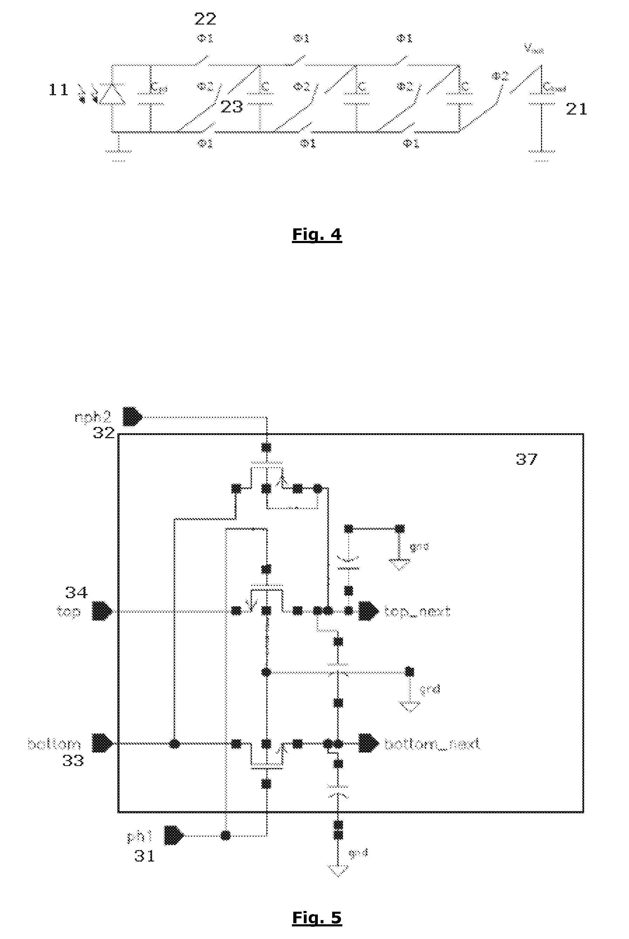

Fig.4 shows a conceptual charge pump circuit schematic. At the output a big capacitor $C_{load}$ (**21**) is located, acting as an energy reservoir for the load. In parallel with the photodiode (**11**), another large capacitor can be put to buffer the diode voltage. The charge pump works in two phases:

- $\phi_1$ (**22**) closed: all capacitor C are in parallel to the photodiode (and with its junction capacitance $C_{pd}$). The capacitors are charged up to approximately -0.5V at the top plate.
- $\phi_2$ (**23**) closed: all capacitors are put in series. The first capacitor of the chain is inverted (bottom plate to ground) to get the voltage inversion. $\phi_1$ and $\phi_2$ are non-overlapping clocks.

In the present invention, the switch connecting the last stage of the charge pump to the load capacitor can be replaced by a diode, diode connected transistor, or an 'active diode' (transistor with gate voltage driven by a comparator with drain and source of the transistor as inputs).

The performance of the charge pump is largely determined by the parasitic capacitances to ground, at both sides of the capacitor C. In the simulations a parasitic capacitance of 5% of C is assumed (which is possible with MiM capacitors in modern CMOS).

Fig.5 shows a unit cell (**37**) of a charge pump, with the parasitic capacitors present. The switches for $\phi_1$ (ph1 on fig.4) (**31**) are NMOS transistors (with bulk automatically connected to the substrate). They are switched on when $\phi_1$ reaches 0.5V. The bottom plate (**33**) of the capacitor is then tied to 0V. The top plate (**34**) will be tied to -0.5V. When $\phi_1$ is switched to 0V, the switches open and disconnect the capacitors. The switches for $\phi_2$ (ph2 on fig.4, nph2 (**32**) is the inverse of ph2) are PMOS transistors. An NMOS would require to be driven by ($V_{out}$ + $V_{th,NMOS}$) which is not available. The body terminal of the PMOS is connected to 'top_next', which is always higher than or equal to the voltage at the PMOS source. When connected in this way, the PMOS is switched off when its gate is at the voltage of 'top_next' (could be the output voltage which is available). To switch on the PMOS transistor, a negative voltage is required. This is so because 'top_next' can be as low as 0V at startup. When the source is at 0V, the PMOS will not switch on with its gate at 0V.

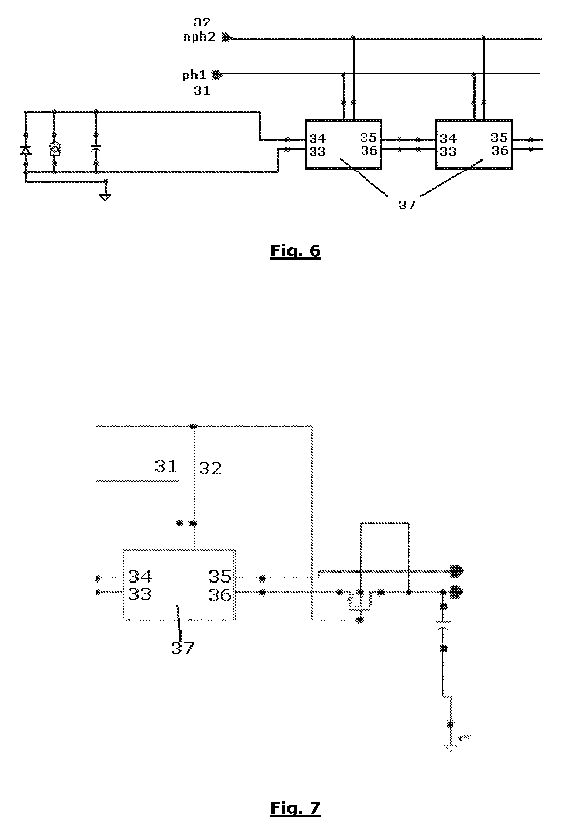

The charge pump comprises of a number of such unit cells. Fig.6 shows a photodiode with a first and a second unit cell (**37**). Fig.7 shows the last cell of the output node and the load.

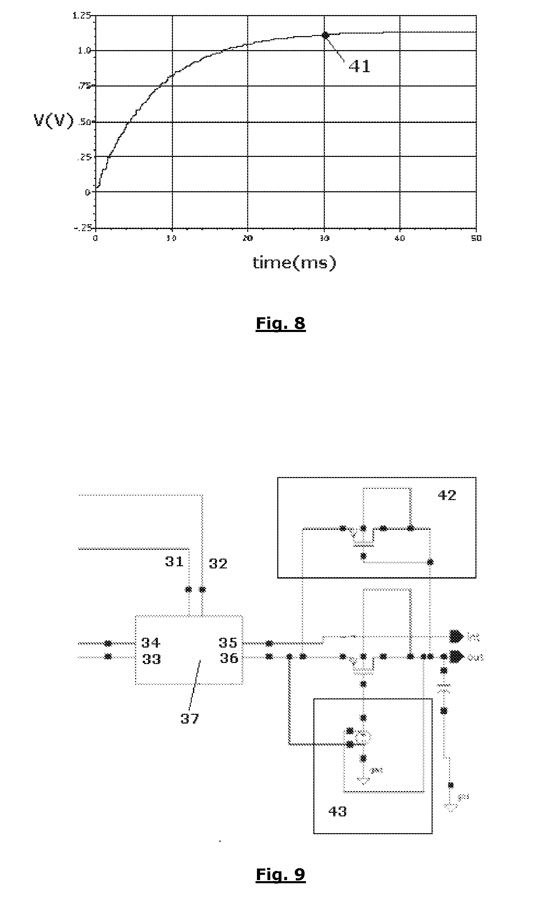

Fig.8 shows the result for a simulation with the following conditions:

- $\phi_1$: external clock, 0V - 1.2V, 4kHz, 100$\mu$s on-time
- $\phi_2$: external clock, high: 1.2V low: -1V, 4kHz, 100ms on-time
- Charge pump capacitor: 5pF
- 10 stages
- Parasitic capacitance: 5% of charge pump capacitance
- Photocurrent: 1.25 $\mu$A
- Load: 100pF

The circuit inverts the photodiode voltage and outputs 1.13V after 30ms (**41**).

The parasitic capacitance on the plates of the charge pump capacitances severely reduces the charge pump efficiency. This is a known effect and we refer to the literature for this. Modern CMOS processes offer MiM capacitors (metal-isolator-metal) which have a small parasitic capacitance.

*Optimal clock frequency for the charge pump*

The clock frequency of the charge pump determines the amount of power transferred through the charge pump. In most charge pump voltage regulator circuits, the clock frequency and transmitted power is usually determined by the load. This assumes that an almost infinite power source is available (e.g. a battery, or power converted from the electrical power network). In that situation, the optimal clock frequency of the converter is proportional to the load power.

According to the invention, the situation is reversed. The load comprises e.g. a battery or large capacitor, in which a large amount of power can be stored. The input power can however be limited. The optimal operating point for the system is where the system converts all available input power to the load. For example at lower light levels, less electrical power is available from the photodiode. Therefore we propose an optimal solution wherein the clock generator is clocked proportionally to the light power.

The maximum power transmitted in a charge pump can be written as:

$$ P = f \frac{C \cdot V^2}{2} \qquad\qquad (1) $$

With f: charge pump clock frequency, C: total capacitance in each charge pump stage, V: voltage swing on the capacitors. Depending on the charge pump design, C can correspond to the capacitance in a single stage (as in a Dickson charge pump, discussed below) or the total capacitance of all capacitors in parallel (as in the converter discussed earlier).

As shown by the above equation, the maximal power that can be transmitted through the charge pump is proportional to the clock frequency. The power consumed by the charge pump mainly contains the power to clock the different switches inside the pump circuit. The optimum operating point of the charge pump is when the clock frequency is adapted so that the maximal power that can be transmitted by the charge pump is equal to the desired output power, or in our case, to the available input power. At its optimal power point, the efficiency of the charge pump is maximal. It is less efficient to clock a charge pump at a frequency higher than this optimal point, as the power consumed in the pump circuit will increase, whilst the power transferred to the output will not increase. It is not possible to operate a charge pump at a frequency lower than the optimal frequency, since the transferred power will be too low. Table 2 shows the calculation of the optimal clock frequency for given example values of input current and voltage, and a certain charge pump configuration.

The above analysis shows that, when the energy scavenging device is a photovoltaic cell, the optimal clock frequency is proportional to the photocurrent generated in the photovoltaic cell. If the clock is being generated by an auxiliary circuit which uses a scaled auxiliary photodiode, this scaling of the optimal clock frequency can be obtained automatically. Since the scaled auxiliary photodiode carries a scaled version of the photocurrent, it will automatically adapt to a slower clock at lower light conditions.

Table 2: calculation of optimal clock frequency for conditions of table 1

| | | |
|---|---|---|
| Photocurrent | 1.25 | μA |
| Power | 0.625 | μW |
| Charge pump capacitor | 5 | pF |
| # stages | 10 | |
| Total charge pump capacitance in $\phi_1$ (all parallel) | 50 | pF |
| Total charge pump capacitance in $\phi_2$ (all in series) | 0.5 | pF |
| $\Delta V$ on charge pump capacitor | 0.5 | V |
| Integration time to reach $\Delta V$ | 2e-5 | s |
| | 20 | μs |
| Converter clock | 50 | kHz |
| Energy/cycle | 1.25e-11 | J |
| Available charge/cycle (in photocurrent, $I_{ph}*dt$) | 2.5e-11 | C |
| Used charge/cycle (on capacitor, $C_{ph1}*dV$) | 2.5e-11 | C |

*Output stage with relaxed $\phi_2$ requirements*

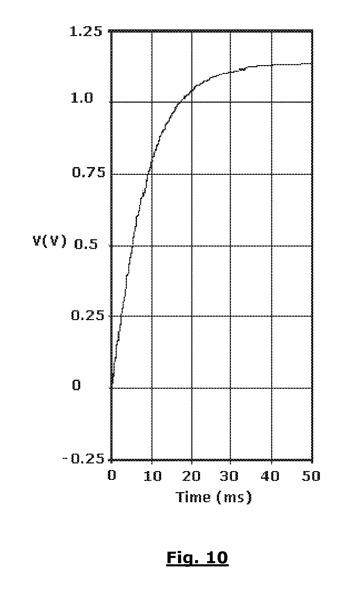

The high level of $\phi_2$ is set by the transistor that connects to the load/output capacitor. When the output is at $V_{out}$, the switch $\phi_2$ needs to be open when the level is high. This requires that $V_g > V_{out} + V_{th}$, PMOS. The other $\phi_2$ switches (inside the unit cell of the charge pump) operate with a high level of 0V. Alternatively, this last switch can be replaced by a diode or diode connected transistor which makes the voltage requirements for $\phi_2$ simpler. The drawback of such approach is that one looses the forward voltage (transistor $V_{th}$ or diode forward voltage) over this transistor/diode. This is improved by the use of a PMOS driven by a comparator (supplied by the output), but precautions must be made that the circuit can still start autonomously in that case. A diode or diode connected PMOS in parallel to the switch is added to guarantee start-up. Fig.9 shows the proposed schematic for the output stage. An additional transistor (**42**) helps startup at the moment when $V_{out}$ is too low to power the VCVS (voltage controlled voltage source). The VCVS (**43**) is a basic 5-T OTA designed for low power (and low speed), powered by the output. Fig.10 shows a simulation result obtained with this configuration.

*Proposed clock generator circuit*

We propose to use series connected photodiodes (p+/n-well) to generate the appropriate voltage levels for $\phi1$ (**31**). These diodes can be isolated from the substrate and put in series (in contrary to the main photodiode). We can live with the low quantum efficiency of these photodiodes because of the low output power requirements.

2 (or more) photodiodes in series (**51**) will be connected directly to the $\phi1$ clock line (**31**). A discharge circuit driven from an oscillator will reset $\phi1$. That oscillator is driven by a scaled version of the photodiodes, this ensures that the clock frequency is proportional to the photocurrent.

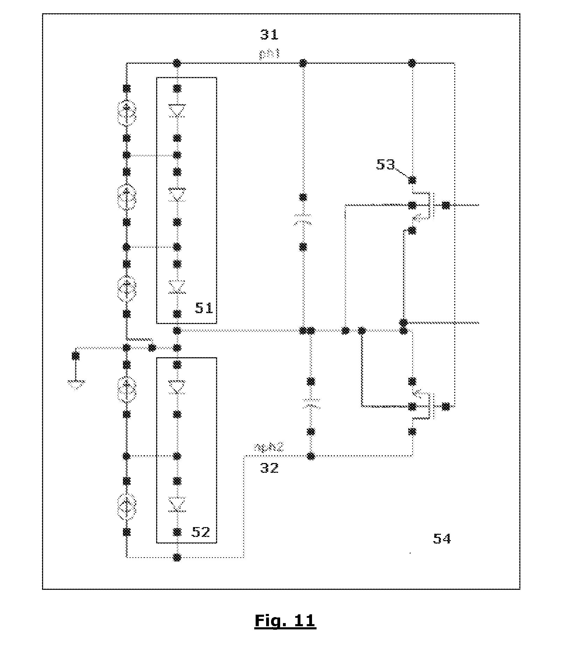

Clock $\phi2$ (**32**) is also charged by a photodiode (**52**), this can still be an n-well/p-substrate diode. The voltage on the chip can never be below -0.6V since also the p-sub/n-well diode will have at least a parasitic n-well/p-substrate diode. We found out in simulations that 2 diodes in series still improves the low level in case when the photocurrent is low, since the voltage over one diode was lower than 0.6V. Therefore we connect one n-well/p-sub diode and a p+/n-well diode in series to generate $\phi2$. $\phi2$ is discharged by a switch controlled by $\phi1$ (to ensure the correct signal polarity). Fig.11 shows the clock voltage generation circuit (**54**) to generate $\phi1$ and $\phi2$.

The gate of M1 (**53**) is driven by an oscillator. The oscillator uses photodiodes with as scaled version of the photodiodes in the clock generator circuit. This ensures again clocking at the optimal frequency (a scaled version of the photocurrent).

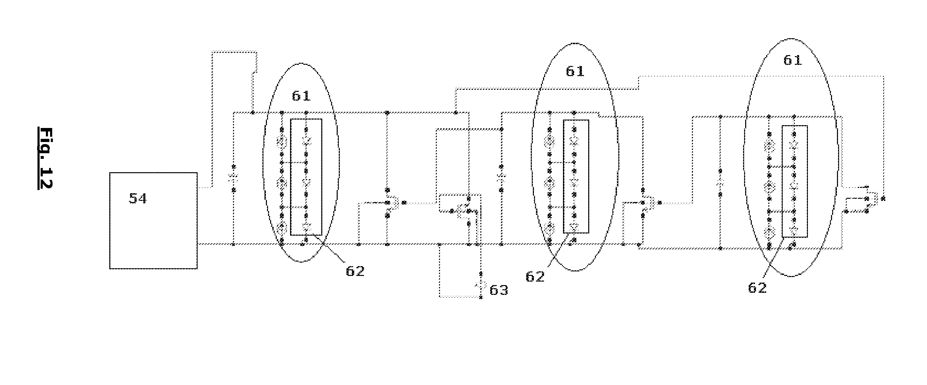

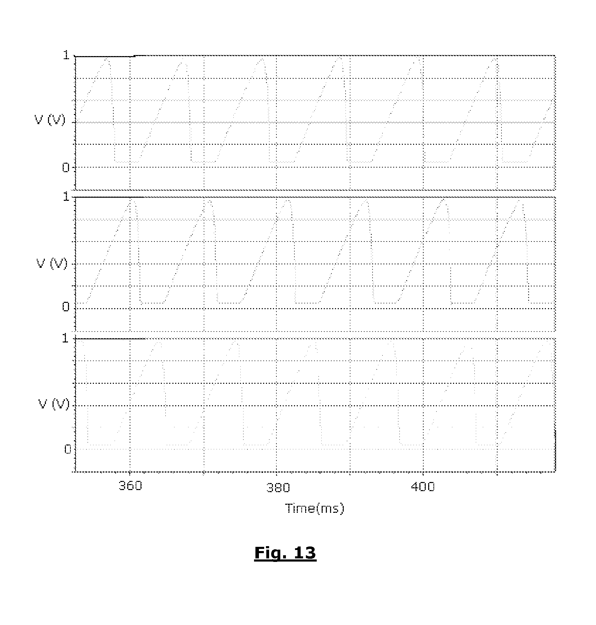

The oscillator is made with a 'kind of' 3-stage ring oscillator driven by photodiodes (see fig.12). Each of the stages (**61**) contains a set of 3 photodiodes (**62**) in series that charge a capacitor. When the voltage on the diodes is high enough, it shorts the capacitor in the next stage of the oscillator. This way an oscillation is created if an uneven amount of stages are coupled (and the last stage is used to reset the first one). The circuit needs a 'kick' to start oscillating (**63**). This may be offered by a switch or thermal noise. The output (voltage vs time) of the three phases is plotted in Fig. 13.

The entire system is simulated with the following conditions:

- 10 charge pump stages
- Photocurrent in main diode of 1.25 $\mu$A
- Photocurrent in support (clock generator voltage) photodiodes of 50 nA (for the n-well/p-sub diode), 1/4th of this current for the p+/n-well diodes (connected in series)
- Charge pump capacitors of 5 pF
- Parasitic capacitance on charge pump of 1/20th of the charge pump capacitance

*Implementation with a Dickson charge pump*

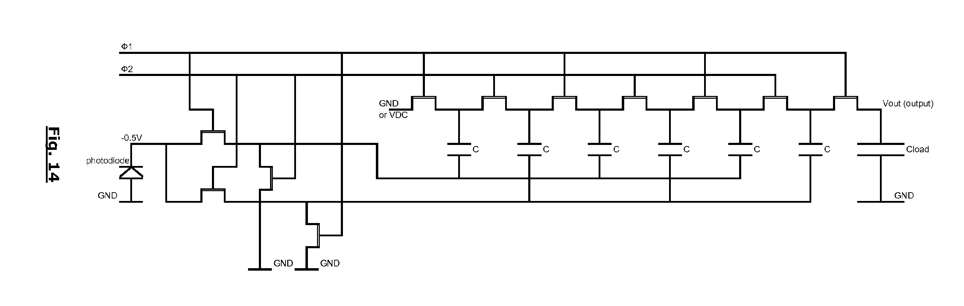

An alternative implementation of the circuit makes use of a socalled Dickson charge pump. Figure 14 shows such an implementation, making use of active NMOS switches. The bulk connection of the NMOS transistor is connected to GND by the substrate. PMOS devices would require connecting the bulk to the output line, which could be problematic during start-up of the circuit.

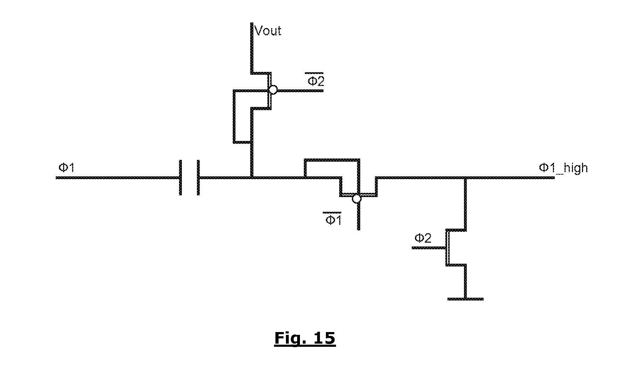

This charge pump requires different clock frequencies and other voltage levels for the $\phi$1 and $\phi$2 clocks than the circuit previously described. Ideally, $\phi$1 and $\phi$2 have to be pulsed above the output voltage so that the last NMOS switch in the charge pump is still operated in saturation. This is realized by a bootstrap circuit. The circuit shown in figure 15 increases the voltage for $\phi$1, a similar circuit can be used for $\phi$2. This bootstrap circuit drives the NMOS transistors in the last stages of the Dickson Charge Pump. It is not required for the first stages of the charge pump (but it may be still connected to the first stages to provide a simpler clocking circuit).

*Improved clock generator design*

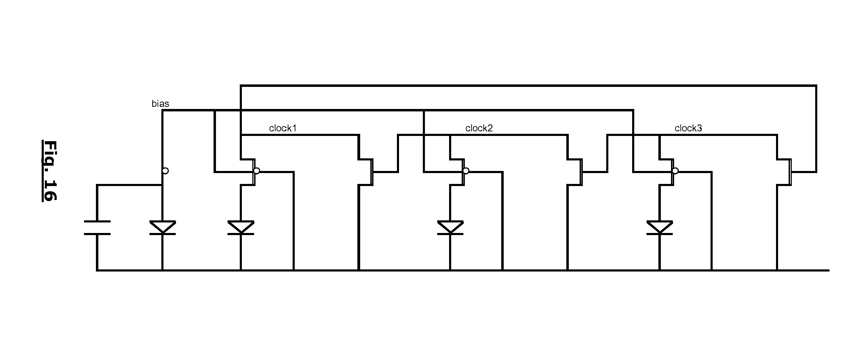

In the charge pump previously described, the parasitic n-well/p-substrate junction limits the build-up of voltages higher than 0.5V. The frequency of the clock generator is too low to be used in conjunction with the Dickson charge pump. The Dickson charge pump requires different voltage levels than the charge pump previously described. A Dickson charge pump with 50 pF capacitors and a voltage swing of 0.45V requires a clock frequency of 5 MHz to transfer 50 $\mu$W (P=f*C*V^2 /2). The clock generator of figure 16 can be used in conjunction with a Dickson pump. It is a kind of ring oscillator composed of an uneven number of inverters. The speed of the inverters is controlled by photocurrent, which is provided in the photodiodes in this circuit. Unlike figure 12, the photodiodes are connected through a PMOS transistor to the clock output nodes. This extra PMOS transistor reduces the capacitance of the clock output node, hereby increasing the clock frequency. Furthermore, the circuit contains only one p+/n-well photodiode (no diodes in series). This means that it does not suffer from parasitic leakage currents of the parasitic n-well/p-substrate junction. For the single diode, this parasitic junction is shorted (to ground). The well connection of the PMOS transistors in this circuit is connected to a separate photodiode, which is buffered by a capacitance. This ensures that the well voltage is always higher than or equal to the voltage at the source of the PMOS. This is required for proper operation of the transistor.

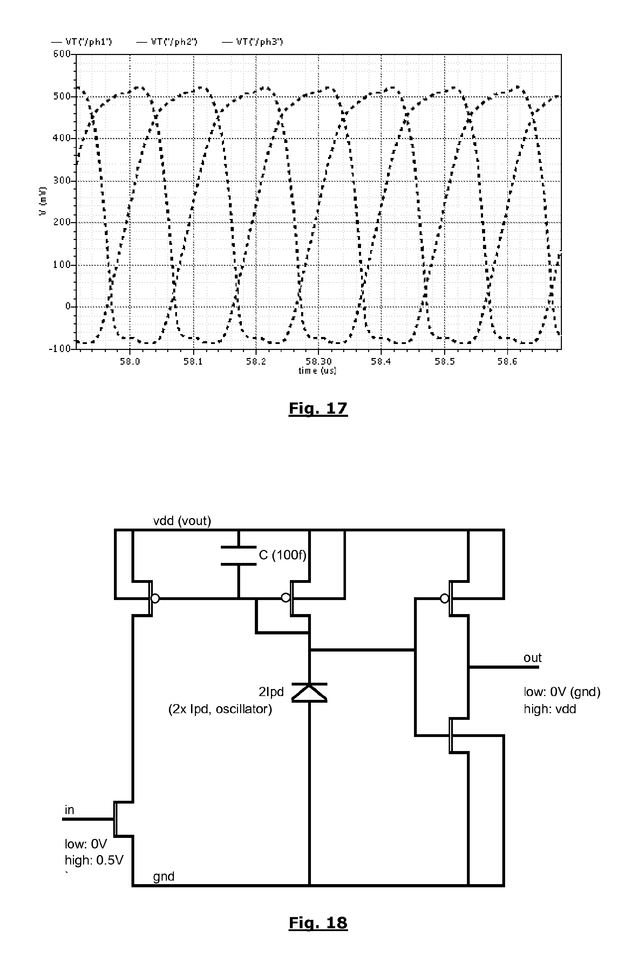

The output of the clock generator of figure 16 is a voltage varying between 0V and (approx) 0.5V with a sawtooth waveform shape. It is shown in figure 17. To kickstart the oscillator, a kick on one of the clock lines may be required. This can be provided by an additional switch between one of the clock outputs and ground. This can also be provided by thermal activity in the circuit.

The signal levels at the output of the clock generator of figure 16 need to be transferred by level shifters to a signal between 0 and Vout. Figure 18 shows such circuit. It makes again use of a photodiode to adapt the threshold level of the input inverter, since the high level of the output of the clock oscillator depends on the photocurrent and will vary considerably over a large light power range. This circuit can directly drive the first stages of the charge pump, and it can drive the bootstrap circuit shown in figure 15. Alternative implementations with conventional current sources or references instead of a photodiode are also possible.

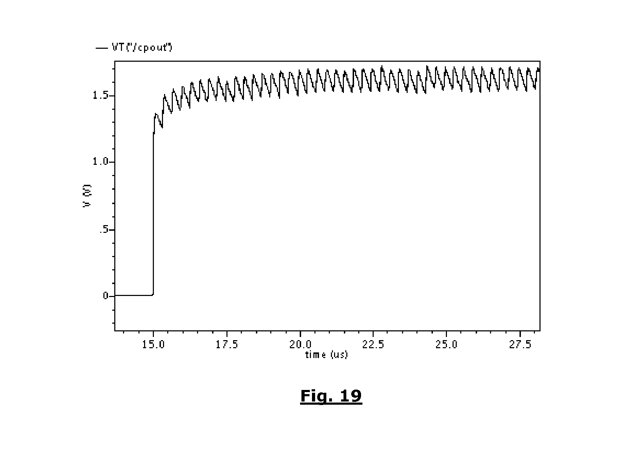

Figure 19 shows a simulation of a charge pump circuit with the following conditions:

- a Dickson charge pump with 3 stages which contain two 100 pF capacitors in each stage.
- an on-chip oscillator generating a frequency near 3.88 Mhz
- an external load of 100KOhm and a 22 pF buffer capacitor at the output
- an on-chip photodiode of 2 x 1 mm$^2$, and a photocurrent of 200 $\mu$A

The simulation shows that an average power of 22 $\mu$W is generated in the load.

**Claims**

**1.** An electronic power conversion circuit (**103**) for converting an input power (**101**) to an output power (**102**), said circuit comprising:

at least one conversion block (**104**), each block comprising an input, an output and a plurality of charge storage elements (**108**) and switches between said input and output (**105**), each block being configured such that the block is alternately switchable between a first state (**106**) in which electric charge is loaded from said input and a second state (**107**) in which electric charge is supplied as converted power to said output;

a clock generator (**109**) for generating clock signals for controlling said switches (**105**) of said at least one conversion block and thereby switching the at least one conversion block between said first (**106**) and second (**107**) states;

**characterized in that** said clock generator (**109**) comprises at least one input node (**110**) for receiving at least one input parameter and **in that** said clock generator (**109**) is provided for varying the frequency of said clock signals in relation to said at least one input parameter which is/are received on said at least one input node (**110**).

**2.** A circuit according to claim 1, **characterized in that** the circuit is provided for converting a variable input power supplied from an energy scavenging means to a substantially fixed output power, one of said at least one input parameters being formed by said variable input power of said energy scavenging means.

**3.** A circuit according to claim 2, **characterized in that** said energy scavenging means is a photovoltaic cell converting light energy into a photovoltaic current.

**4.** A circuit according to claim 2, **characterized in that** said energy scavenging means is a thermal energy scavenging device converting thermal energy into a current related to the thermal gradient across said thermal energy scavenging device.

**4.** A circuit according to claim 2, 3 or 4, **characterized in that** said circuit and said energy scavenging means are implemented on a single substrate.

**5.** A circuit according to any one of the claims 1-4, **characterized in that** said at least one conversion block is a charge pump, said charge pump comprising a plurality of capacitors as charge storage elements.

**6.** A circuit according to any one of the claims 1-4, **characterized in that** said at least one conversion block is an inductive power converter, said converter comprising at least one inductor as charge storage element.

**7.** A circuit according to any one of the previous claims, **characterized in that** one of said at least one input parameters is formed by said output power.

**8.** A circuit according to any one of the previous claims, **characterized in that** said clock generator comprises a separate power source provided for supplying power in relation to said input power.

**9.** A circuit according to any one of the previous claims, **characterized in that** said clock generator comprises a ring oscillator connected to said at least one input node and provided for generating a control frequency in relation to said at least one input parameter, said clock signals being generated from said control frequency.

**10.** A circuit according to any one of the previous claims **characterized in that** said output is supplied to a load, said circuit and at least part of said load being implemented on a single substrate.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**European Patent Office**  **EUROPEAN SEARCH REPORT**

Application Number

EP 08 15 0448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 294 950 B1 (LEE JAE-GOO [KR] ET AL) 25 September 2001 (2001-09-25) | 1,5 | INV. H02M3/07 |
| Y | * abstract; figures 3,4c * | 2-4,7 | H02J7/35 |
| X | US 6 064 275 A (YAMAUCHI TADAAKI [JP]) 16 May 2000 (2000-05-16) * abstract; figure 5 * | 1,5,9 | |
| X | US 6 370 046 B1 (NEBRIGIC DRAGAN DANILO [US] ET AL) 9 April 2002 (2002-04-09) * abstract; figures 3,4 * | 1,5 | |
| X | US 5 959 853 A (KOS MAREK JOHN [US]) 28 September 1999 (1999-09-28) * abstract; figure 1 * | 1,5 | |
| Y | EP 1 737 100 A (SHINDENGEN ELECTRIC MFG [JP]) 27 December 2006 (2006-12-27) * abstract; figure 1 * | 2-4,7 | |
| D,Y | US 2005/061361 A1 (OCHI SAM [US] ET AL) 24 March 2005 (2005-03-24) * abstract; figure 2 * | 4 | TECHNICAL FIELDS SEARCHED (IPC) H02M H01L H02J |

The present search report has been drawn up for all claims

| Place of search | Date of completion of the search | Examiner |
|---|---|---|
| Munich | 22 April 2008 | Braccini, Roberto |

EPO FORM 1503 03.82 (P04C01)

**ANNEX TO THE EUROPEAN SEARCH REPORT
ON EUROPEAN PATENT APPLICATION NO.**

EP 08 15 0448

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2008

| Patent document cited in search report | | Publication date | Patent family member(s) | | Publication date |
|---|---|---|---|---|---|
| US 6294950 | B1 | 25-09-2001 | DE | 10003059 A1 | 08-02-2001 |
| | | | KR | 20010011502 A | 15-02-2001 |
| US 6064275 | A | 16-05-2000 | NONE | | |
| US 6370046 | B1 | 09-04-2002 | NONE | | |
| US 5959853 | A | 28-09-1999 | NONE | | |
| EP 1737100 | A | 27-12-2006 | WO | 2005083868 A1 | 09-09-2005 |
| | | | KR | 20060041280 A | 11-05-2006 |
| | | | US | 2007138996 A1 | 21-06-2007 |
| US 2005061361 | A1 | 24-03-2005 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7098394 B

- US 20050061361 A

**Non-patent literature cited in the description**

- **COLBY et al.** A SOI process for fabrication of solar cells, transistors and electrostatic actuators. *Transducers '03, The 12th International Conference on Solid State Sensors, Actuators and Microsystems,* 08 June 2003

- **A. FISH et al.** CMOS Image Sensor with Self-Powered Generation Capability. *IEEE Transactions on Circuits and Systems - II: Express Briefs,* November 2006, vol. 53 (11), 1210-1214